Europäisches Patentamt

European Patent Office

Office européen des brevets

(11) Veröffentlichungsnummer : **0 150 476**
**B1**

(12) **EUROPÄISCHE PATENTSCHRIFT**

(45) Veröffentlichungstag der Patentschrift :
29.07.87

(21) Anmeldenummer : 84116128.4

(22) Anmeldetag : 21.12.84

(51) Int. Cl.⁴ : **C 09 D   3/66**

(54) Überzugsmittel.

(30) Priorität : 18.01.84 DE 3401559

(43) Veröffentlichungstag der Anmeldung :
07.08.85 Patentblatt 85/32

(45) Bekanntmachung des Hinweises auf die Patenterteilung : 29.07.87 Patentblatt 87/31

(84) Benannte Vertragsstaaten :
AT BE CH DE FR GB IT LI LU NL SE

(56) Entgegenhaltungen :
DE-A- 1 669 104
DE-A- 1 954 678

(73) Patentinhaber : DYNAMIT NOBEL AKTIENGESELLS-
CHAFT
Postfach 1261
D-5210 Troisdorf, Bez. Köln (DE)

(72) Erfinder : Elmenthaler, Bernd
Heller Strasse 56
D-4600 Dortmund (DE)
Erfinder : Esken, Franz Josef
Akazienweg 13
D-5810 Witten (DE)
Erfinder : Franzmann, Giselher, Dr.
In der Schlade 61
D-5810 Witten (DE)
Erfinder : Wulff, Helmut, Dr.
Siegfriedstrasse 43
D-5810 Witten (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind flüssige, vernetzbare Überzugsmittel gemäß dem Oberbegriff von Anspruch 1 sowie deren Verwendung nach Anspruch 2.

Überzugsmittel, welche lineare oder verzweigte fettsäurefreie Polyester als Bindemittelkomponente enthalten, sind bekannt (DE-AS 26 21 657, DE-AS 25 54 220, DE-AS 18 05 198, US-PS 4 071 578). Diese führen jedoch bei der Verwendung zur Herstellung vernetzter Überzüge nicht zu Produkten mit den für diese Anwendung erforderlichen Eigenschaften, insbesondere hinsichtlich Verlauf und Bedruckbarkeit.

Des weiteren sind sogenannte kurzölige Alkydharze als Bestandteile thermisch vernetzbarer Überzugsmittel, der sogenannten Einbrennlacke, bekannt. Mit diesen Harzen lassen sich die spezifischen Eigenschaften von Überzügen für beispielsweise Emballagen, wie insbesondere Tuben, Konservendosen usw., nicht erreichen, insbesondere hinsichtlich Elastizität und Festkörpergehalt.

Ersetzt man einen Teil der in solchen Alkydharzen üblichen drei- oder mehrwertigen Alkohole durch Diole, wie dies z. B. in der Firmenschrift « 1,4-Cyclohexandimethanol » der Eastman Kodak Company vom Juli 1965 auf Seite 11 (zitiert in DE-AS 18 05 198, Spalte 3, Zeilen 15-22) beschrieben ist, so steigt die Elastizität der daraus hergestellten Überzüge auf noch nicht befriedigende Werte und die Bedruckbarkeit ist weiterhin mangelhaft.

Aus der DE-A-1 669 104 ist ein Verfahren zur Herstellung von auf Metallen gut haftenden Einbrennlacken, vor allem Stanzlacken auf der Grundlage von Phthalsäure enthaltenden Polyesterharzen und Hexaalkoxymethylmelaminen, bekannt. Dabei besteht die Phthalsäure zu wenigstens zwei Dritteln aus Terephthalsäureeinheiten, und die Mischung ist frei von sauren Katalysatoren. Die erhaltenen Produkte weisen zwar eine verbesserte Benetzung der Pigmente, einen verbesserten Verlauf und eine einwandfreie Stanzfähigkeit auf, besitzen jedoch nicht die gewünschte Kombination von Eigenschaften hinsichtlich Verlauf, Bedruckbarkeit, Haftfestigkeit, Elastizität und Festkörpergehalt.

Der Erfindung lag somit die Aufgabe zugrunde, vernetzbare Überzugsmittel zu entwickeln, welche bei möglichst hohem Festkörpergehalt und niedrigen Einbrenntemperaturen innerhalb kurzer Zeit zu ausreichend vernetzten, elastischen, auch nach dem Sterilisieren gut haftenden, hervorragend verlaufenden und einwandfrei bedruckbaren Überzügen führen, Eigenschaften, wie sie z. B. von der Emballagenindustrie verlangt werden. Hierbei kommt es auch auf besonders gutes Pigmentbenetzvermögen des Bindemittels an, damit gut deckende und hochglänzende Überzüge geringer Schichtdicke erhalten werden.

Es wurde nun gefunden, daß entsprechende Überzugsmittel erhalten werden, wenn diese gemäß dem Kennzeichen von Anspruch 1 zusammengesetzt sind, d. h. zwischen 5 und 15 Mol-% an aliphatischen Monocarbonsäuren enthalten, bezogen auf den Säureanteil der Polyester. Überraschend und nicht vorhersehbar war, daß sowohl Verlauf und Bedruckbarkeit als auch Sterilisationsbeständigkeit der Überzüge nur innerhalb dieses engen Bereiches optimal sind, während die Sterilisationsbeständigkeit und der Verlauf bei Gehalten über 15 Mol-% Monocarbonsäuren zunehmend schlechter werden. Bei Gehalten unter 5 Mol-% sind Verlauf und Bedruckbarkeit unbefriedigend.

Im Sinne der Erfindung geeignete aliphatische lineare Monocarbonsäuren gemäß Anspruch 1 Absatz A4 sind z. B. die homologen gesättigten Fettsäuren mit 6 bis 18 Kohlenstoffatomen in der Kette — insbesondere Capronsäure, Önanthsäure, Caprylsäure, Pelargonsäure, Caprinsäure, Laurin-, Myristin-, Palmitin- und Stearinsäure, vorzugsweise natürlich vorkommende Gemische bzw. Destillatfraktionen, wie z. B. die Vorlauffettsäuren von Kokosölfettsäuren sowie die Hauptlauf derselben, der überwiegend Laurinsäure enthält. Aber auch Gemische gesättigter und ungesättigter Fettsäuren, wie z. B. Baumwollsaat- und Erdnußöl-Fettsäuren, sind brauchbar.

Geeignete verzweigte Fettsäuren sind die nach der Oxo-Synthese zugänglichen Monocarbonsäuren, wie z. B. Isooctan-, Isononan-, Isodecansäure oder Gemische verzweigter Monocarbonsäuren mit 9 bis 11 Kohlenstoffatomen und einer tertiär gebundenen Carboxylgruppe, die zweckmäßig in Form ihrer handelsüblichen Glycidylester verwendet werden.

Als aromatische Dicarbonsäuren gemäß Anspruch 1 Absatz A1 sind Terephthalsäure, Isophthalsäure, Phthalsäure oder deren veresterbare bzw. umesterbare Derivate, wie z. B. Dimethylterephthalat oder Phthalsäureanhydrid, geeignet. Cycloaliphatische Dicarbonsäuren gemäß Anspruch 1 Absatz A1 sind z. B. Hexahydrophthalsäure, Tetrahydrophthalsäure, Endomethylen-tetrahydrophthalsäure, Hexahydroterephthalsäure-dimethylester, Hexahydro-isophthalsäure.

Geeignete Tricarbonsäuren gemäß Anspruch 1 Absatz A2 sind z. B. Trimellithsäure, Trimesinsäure und Hemimellithsäure. Bevorzugt wird Trimellithsäureanhydrid.

Geeignete aliphatische Dicarbonsäuren gemäß Anspruch 1 Absatz A3 sind z. B. Bernstein-, Glutar-, Adipin-, Azelain-, Sebacinsäure sowie die sogenannten Dimersäuren. Bevorzugt werden Dimersäuren.

Geeignete aliphatische lineare oder verzweigte Diole gemäß Anspruch 1 Absatz B1 sind z. B. Ethylenglykol, Propandiol-1,2, Butandiol-1,3, Butandiol-1,4, Pentandiol-1,5, Hexandiol-1,6, 2,2-Dimethylpropandiol-1,3 (Neopentylglykol), Hydroxypivalinsäure-neopentylglykolester, 2,2,4- und 2,4,4-Trimethylhexandiol, Diäthylenglykol, Dipropylenglykol, Triäthylenglykol, Tripropylenglykol.

Geeignete wenigstens dreiwertige Alkohole gemäß Anspruch 1 Absatz B2 sind z. B Glycerin, Trimethyilolethan, Trimethylolpropan und Pentaerythrit.

2

Die Gemische A und B werden durch Umestern der umesterbaren Dicarbonsäurederivate bzw. durch Verestern der Carbonsäuren mit den mehrwertigen Alkoholen in bekannter Weise in einer Stufe oder mehreren Stufen zu den Polyesterharzen der erfindungsgemäßen Überzugsmittel kondensiert, wobei geeignete Umesterungskatalysatoren, wie z. B. Tetrabutyl-, Tetraisopropyltitanat und/oder Zinkacetat, oder aber Veresterungskatalysatoren, wie z. B. phosphorige Säure, hypophosphorige Säure (Phosphinsäure) oder Dibutylzinnoxid, verwendet werden. Nach einem häufig angewendeten Verfahren werden zunächst Dicarbonsäuredialkylester mit mehrwertigen Alkoholen im Molverhältnis von etwa 1 : 1,5 bis 1 : 2 in Gegenwart der genannten Umesterungskatalysatoren umgesetzt, wobei das freiwerdende Alkanol abdestilliert wird, zweckmäßig über eine geeignete Kolonne. Danach werden die übrigen Carbonsäuren bzw. gegebenenfalls deren veresterbare Derivate und gegebenenfalls Alkohole des Ansatzes mit den oligomeren Hydroxyestern der 1. Stufe verestert und gegebenenfalls im Vakuum bis zum gewünschten Grad polykondensiert.

Es ist auch möglich, einen geeigneten Polyester stufenweise zu kondensieren, indem z. B. an ein Mol eines Diols 2 Mole eines Dicarbonsäureanhydrids bei Temperaturen bis zu 160 °C addiert werden. An die hierbei entstandenen Carboxylgruppen werden in einer nächsten Stufe handelsübliche Glycidylester von Monocarbonsäuren addiert, gegebenenfalls mittels geeigneter Katalysatoren, wodurch freie Hydroxylgruppen entstehen usw., wie in den deutschen Offenlegungsschriften 24 41 921 und 25 07 985 beschrieben. Man erhält hierbei Polyester mit gleichmäßigerer Molmassenverteilung als bei rein thermischer Kondensation unter Wasseraustritt.

Die Erfindung wird nachfolgend anhand der Beispiele näher erläutert.

## Beispiel 1

### Herstellung eines erfindungsgemäßen Polyesters

366 Massenteile (MT) Terephthalsäure, 503 MT Isophthalsäure, 159 MT einer Dimersäure mit 4-7 Massen-% Trimergehalt, 70 MT einer gehärteten, fraktionierten Kokosölfettsäure, 84 MT Trimethylolpropan, 293 MT Neopentylglykol, 97 MT Ethylenglykol und 133 MT Diethylenglykol werden im Beisein von 2 ml einer 60 Massen-%-igen wäßrigen phosphorigen Säure unter Rühren und Hindurchleiten von Inertgas bei allmählich bis auf 254 °C steigender Reaktionstemperatur in bekannter Weise in der Schmelze kondensiert. Das hierbei freiwerdende Wasser wird über eine geeignete Kolonne abdestilliert, überschüssiges Diol zuletzt im Vakuum. Das molare Verhältnis der genannten Rohstoffe ist in Tabelle 1 enthalten.

Man erhält so einen fast farblosen Polyester, der zweckmäßig noch heiß in geeigneten Lösungsmitteln gelöst wird. Als Lösungsmittel werden beispielsweise Gemische aromatischer Kohlenwasserstoffe, Glykolester, Glykoletherester, Dicarbonsäureester oder Mischungen davon eingesetzt, vorzugsweise ein Gemisch aromatischer Kohlenwasserstoffe. Die Kennzahlen des Polyesters und seiner Lösung in zwei unterschiedlichen Lösungsmitteln sind ebenfalls in Tabelle 1 enthalten.

## Beispiele 2, 3 und 4

### Vergleichsbeispiele nach dem Stand der Technik

Es wurden drei Polyester V1, V2 und V3 in analoger Weise hergestellt. Zusammensetzung und Kennzahlen sind in Tabelle 1 enthalten.

## Beispiele 5, 6, 7 und 8

### Herstellung der erfindungsgemäßen Überzugsmittel

Aus dem erfindungsgemäßen Polyester des Beispiels 1 und aus den Polyestern der Vergleichsbeispiele 2 bis 4 wurden Lacke der folgenden Zusammensetzung hergestellt :

| | Massen-Teile |
|---|---|
| Polyester aus Beispiel 1 bzw. Polyester V1 bis V3, als 55 Massen-%-ige Lösung | 45,10 |
| Titandioxid Rutil | 33,80 |
| Ethylglykolacetat | 3,30 |
| Benzoguanamin-Formaldehydharz 62 Massen-%-ig | 4,20 |
| Butyliertes Melamin-Formaldehydharz 55 Massen-%-ig | 1,30 |
| Hexamethoximethyl-Melaminharz 98 Massen-%-ig | 3,40 |
| Epoxidharz mit Epoxidwert von 0,37 bis 0,43 als 90 Massen-%-ige Lösung | 2,50 |
| p-Toluolsulfonsäure, 70 Massen-%-ig in Isopropanol | 0,15 |
| Ethylglykolacetat | 1,60 |

| Butyldiglykol | 2,00 |
|---|---|
| Lösemittel S 150 1) | 1,15 |
| Lösemittel S 200 2) | 1,50 |
| | 100,00 |

1) Zwischen ca. 175 °C und 205 °C siedendes Destillat mit hohem Gehalt an aromatischen Kohlenwasserstoffen
2) Zwischen ca. 220 °C und 280 °C siedendes Destillat mit hohem Gehalt an aromatischen Kohlenwasserstoffen

In diesen Überzugsmitteln ist das Massen-Verhältnis

| Polyesterharz : Vernetzer (Aminoplastharze) | = ca. 80 : 20 |
|---|---|
| Bindemittel (Polyesterharz + Vernetzer) : Pigment (Rutil) | = ca. 1 : 1 |
| Auslaufzeit 4 DIN 53211 | = ca. 140 bis 160 sec. bei 20 °C |
| Festkörpergehalt | = ca. 66 Massen% |

Mit diesen in bekannter Weise hergestellten Überzugsmitteln L 1, LV 1, LV 2 und LV 3 werden Elektrolytbleche E 1, die aus elektrolytisch verzinntem Stahlblech (Weißblech) bestehen, mittels einer Rakel beschichtet und 12 Minuten bei 180 °C im Umluftofen eingebrannt, wonach vernetzte Lackfilme mit ca. 10 μm Trockenfilmstärke erhalten werden.

Es wurden folgende Eigenschaften geprüft und beurteilt :

Verlauf des Lackfilms nach dem Auftragen mittels einer Lackierwalze visuell

Bedruckbarkeit mit konventionellen sowie mit UV-härtenden Druckfarben

Abdruckfestigkeit : Druckbelastung auf einer 20 cm² großen Prüffläche (Lack auf Lack) bei 50 °C

Dehnbarkeit beim Tiefziehen einer Fischdose bei Schlagtiefung (Impact) nach ECCA T 4 (Vorschrift der European Coil Coating Association) und Schlagfaltprüfung (Wedgebend) nach einem Prüfverfahren, herausgegeben vom Institut für Lebensmitteltechnologie und Verpackung an der TU München : « Merkblätter für die Prüfung von Packmitteln, Merkblatt 11, Prüfverfahren für Konservendosenlacke, Teil 5 »

Sterilisationsbeständigkeit, geprüft an Fischdosen nach 1 Stunde in Wasser von 121 °C im Autoklaven

Reaktivität : Zahl der Doppelhübe (DH) beim Reiben der Lackfilm-Oberfläche mit einer mit Methylethylketon (MEK) getränkten Watte, die mit 1 kg und 2 kg belastet wurde.

Haftfestigkeit durch Gitterschnittprüfung nach DIN 53151.

Die Prüfergebnisse sind in Tabelle 2 enthalten.

(Siehe Tabelle 1 Seite 5 f.)

4

Tabelle 1

| Rohstoffe | Polyester gem. Beispiel 1 | | Polyester Nr. V 1 | | V 2 | | V 3 | |
|---|---|---|---|---|---|---|---|---|
| | Mol | Mol-% | Mol | Mol-% | Mol | Mol-% | Mol | Mol-% |
| TPS | 1,33 | 37,8 | 1,65 | 36 | 1,0 | 33,4 | 0,85 | 28,3 |
| IPS | 1,83 | 52,0 | 1,35 | 30 | 2,0 | 66,6 | 2,0 | 66,7 |
| DIM S | 0,17 | 4,8 | - | - | - | - | - | - |
| KFS | 0,19 | 5,4 | 1,56 | 34 | - | - | - | - |
| TMA | - | - | - | - | - | - | 0,15 | 5,0 |
| TMP | 0,38 | 10 | 1,42 | 40 | - | - | - | - |
| NPG | 1,70 | 45 | 0,71 | 20 | 1,49 | 42,7 | 2,2 | 64,7 |
| EG | 0,94 | 25 | 1,42 | 40 | - | - | - | - |
| DEG | 0,75 | 20 | - | - | - | - | - | - |
| HD | - | - | - | - | 2,0 | 57,3 | 1,2 | 35,3 |

Kennzahlen:

| | | | | |
|---|---|---|---|---|
| SZ | 1,0 | 3,4 | 1,0 | 2,3 |
| OHZ | 42 | 27 | 20 | 41 |
| Lösung | 55 Massen-% +) | 55 Massen-% ++) | 55 Massen-% +) | 55 Massen-% +) |
| Viskosität | 6150 +) | 8250 ++) | 5980 +) | 3700 +) |
| | S 150 +) | S 150/EGA=4:1 | | |

0 150 476

Legende zu Tabelle 1 :

Die Abkürzungen bedeuten :

TPS = Terephthalsäure
IPS = Isophthalsäure
DIM = Dimersäure
KFS = Kokosfettsäure
TMA = Trimellithsäureanhydrid
TMP = Trimethylolpropan
NPG = Neopentylglykol
EG = Ethylenglykol
DEG = Diethylenglykol
HD = Hexandiol-1,6
SZ = Säurezahl nach DIN 53 402 (mg KOH/g)
OHZ = Hydroxylzahl nach DIN 53 240 (mg KOH/g)
+) = in zwischen ca. 175 °C und 205 °C siedenden Destillaten mit hohem Gehalt an aromatischen Kohlenwasserstoffen (m Pa s)
++) = in Gemisch aus 4 MT +) und 1 MT Ethylglykol-acetat (EGA) (m Pa s)

Tabelle 2 : Prüfergebnisse

| Über-zugs-mittel | Verlauf 0 bis 5 | Bedruck-barkeit 0 bis 5 | Abdruck-festigk. 0 bis 5 | Dehnbarkeit | | | Sterilis. beständ. 0 bis 5 | Reakti-vität DH | Haftfest GT 0 - GT 5 |
|---|---|---|---|---|---|---|---|---|---|
| | | | | Fischd. 0 - 5 | Impact (cm bei 1 kg) | Wedge bend (mm) | | | |
| L 1 | 0 | 0 | 2 | 0 | ≤ 90 | 10 | 0 | 7 | 0 |
| LV 1 | 0 | 2 | 5 | 0 | ≤ 90 | 40 | 5 | 1 | 1 |
| LV 2 | 5 | 3 | 4 | 0 | ·· 90 | 10 | 1 | 3 | 0 |
| LV 3 | 5 | 3 | 3 | 0 | ·· 90 | 10 | 1 | 5 | 0 |

Die Bewertung der Prüfergebnisse wurde, wo nicht durch Meßwerte möglich, mit Hilfe einer festen Bewertungsskala durch Kennzahlen von 0 bis 5 entsprechend DIN 53 230 vorgenommen, wobei die Zahl 0 den bestmöglichen Wert und die Zahl 5 den schlechtesten Wert kennzeichnet. Von den Meßwerten ist beim Wedgebend-Test der Wert 10 mm am besten, bei der Reaktivität der Wert 7DH, bei der Haftfestigkeit der Wert 0.

0 150 476

**Patentansprüche**

1. Flüssige, vernetzbare, auf Metallen gut haftende Überzugsmittel aus hydroxylgruppenhaltigen Polyestern und Aminoplastharzen sowie gegebenenfalls Pigmenten und üblichen Lackhilfsmitteln, die

30-5 Massen-% Aminoplastharze und

70-95 Massen-% hydroxylgruppenhaltige Polyester enthalten, welche durch Verestern eines Gemisches A aus aromatischen und/oder cycloaliphatischen und/oder aliphatischen Carbonsäuren einerseits mit einem Gemisch B aus aliphatischen linearen oder verzweigten zwei- und mehrwertigen Alkoholen andererseits erhalten worden sind, dadurch gekennzeichnet, daß Gemisch A aus

A1 70 bis 90 Mol-% aromatischen und/oder cycloaliphatischen Dicarbonsäuren oder deren veresterbaren bzw. umesterbaren Derivaten,

A2 0 bis 20 Mol-% Tricarbonsäuren oder deren veresterbaren bzw. umesterbaren Derivaten,

A3 0 bis 20 Mol-% aliphatischen Dicarbonsäuren und

A4 5 bis 15 Mol-% aliphatischen linearen oder verzweigten Monocarbonsäuren besteht und Gemisch B aus den Komponenten

B1 100 bis 80 Mol-% eines oder mehrerer aliphatischer linearer und/oder verzweigte Diole, die ihrerseits 0 bis 30 Mol-% Etherdiole enthalten können, und

B2 0 bis 20 Mol-% eines wenigstens dreiwertigen aliphatischen Alkohols besteht, wobei die Summe aus A2 und B2 nicht größer als 25 Mol-% ist und mindestens 3 Mol-% mehr als A4 beträgt.

2. Verwendung der Überzugsmittel gemäß Anspruch 1 zur Herstellung vernetzter Überzüge auf metallischen Untergründen, insbesondere für Emballagen.


**Claims**

1. Liquid crosslinkable coating compositions adhering well to metal which consist of hydroxyl group-containing polyesters and aminoplast resins as well as optionally pigments and usual lacquer auxiliary agents, which contain

30-5 % by wt. aminoplast resins and

70-95 % by wt. hydroxyl group-containing polyesters, which have been obtained by esterification of a mixture A of aromatic and/or cycloaliphatic and/or aliphatic carboxylic acids on the one hand with a mixture B of aliphatic linear or branched bi- and polyfunctional alcohols on the other hand, characterised in that mixture A consists of

A1 70 to 90 mol % of aromatic and/or cycloaliphatic dicarboxylic acids or their esterifiable or transesterifiable derivatives,

A2 0 to 20 mol % of tricarboxylic acids or their esterifiable or transesterifiable derivatives,

A3 0 to 20 mole % aliphatic dicarboxylic acids and

A4 5 to 15 mole % of aliphatic linear or branched monocarboxylic acids, and mixture B consists of the components

B1 100 to 80 mole % of one or several aliphatic linear and/or branched diols, which for their part can contain 0 to 30 mole % ether diols, and

B2 0 to 20 mole % of an at least trifunctional aliphatic alcohol, with the sum of A2 and B2 not being greater than 25 mol % and amounting to at least 3 mole % more than A4.

2. Use of the coating compositions according to Claim 1 for the production of crosslinked coatings on metallic substrates, especially for packaging.


**Revendications**

1. Compositions liquides et réticulables de revêtements adhérant bien aux métaux, formées de polyesters contenant des groupes hydroxyles et de résines aminoplastes ainsi qu'éventuellement de pigments et d'adjuvants usuels pour laques et vernis, qui contiennent

30 à 5 % en masse de résines aminoplastes, et

70 à 95 % en masse de polyesters contenant des groupes hydroxyles, que l'on a obtenus par estérification d'un mélange A d'acides carboxyliques aromatiques et/ou cycloaliphatiques et/ou aliphatiques, d'une part, avec un mélange B de dialcools et polyalcools aliphatiques linéaires ou ramifiés, d'autre part, caractérisées en ce que le mélange A consiste en

A1 70 à 90 moles % d'acides dicarboxyliques aromatiques et/ou cycloaliphatiques ou de leurs dérivés estérifiables ou transestérifiables,

A2 0 à 20 moles % d'acides tricarboxyliques ou de leurs dérivés estérifiables ou transestérifiables,

A3 0 à 20 moles % d'acides dicarboxyliques aliphatiques, et

A4 5 à 15 moles % d'acides monocarboxyliques aliphatiques linéaires ou ramifiés, et le mélange B est constitué par les composants

B1 100 à 80 moles % d'un ou plusieurs diols aliphatiques linéaires et/ou ramifiés, qui peuvent contenir pour leur part 0 à 30 moles % d'étherdiols, et

**0 150 476**

B2 0 à 20 moles % d'un alcool aliphatique au moins trivalent, la somme de A2 et de B2 n'étant pas supérieure à 25 moles % et étant supérieure à A4 d'au moins 3 moles %.

2. Utilisation des compositions de revêtement selon la revendication 1 pour préparer des revêtements réticulés sur des subjectiles métalliques, en particulier pour des emballages.

9